(19) Europäisches Patentamt / European Patent Office / Office européen des brevets

(11) **EP 3 015 532 A1**

## (12) EUROPEAN PATENT APPLICATION
published in accordance with Art. 153(4) EPC

(43) Date of publication:
**04.05.2016 Bulletin 2016/18**

(21) Application number: **14816803.2**

(22) Date of filing: **27.06.2014**

(51) Int Cl.:
**C09K 15/18** (2006.01)     **B60C 1/00** (2006.01)
**C08K 5/18** (2006.01)     **C08L 45/00** (2006.01)

(86) International application number:
**PCT/JP2014/067283**

(87) International publication number:
**WO 2014/208757 (31.12.2014 Gazette 2014/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.06.2013 JP 2013135333
27.06.2013 JP 2013135345**

(71) Applicant: **Bridgestone Corporation
Tokyo 104-8340 (JP)**

(72) Inventor: **YANAGIOKA, Masaki
Kodaira-shi
Tokyo 187-8531 (JP)**

(74) Representative: **Oxley, Robin John George
Marks & Clerk LLP
90 Long Acre
London WC2E 9RA (GB)**

## (54) ANTIOXIDANT, RUBBER COMPOSITION, AND TIRE

(57)     Provided are a rubber composition using an antioxidant synthesized from biological resources including botanical resources, wherein the value of $\delta$13C of the antioxidant is from -30‰ to -26‰, or -22‰ or more, and a tire using the rubber composition.

EP 3 015 532 A1

**Description**

Technical Field

The present invention relates to an antioxidant not using fossil resources as the starting material, a rubber composition containing the antioxidant, and a tire using the rubber composition.

Background Art

With the recent growing demand for fossil resources consumption reduction and greenhouse gases emission reduction, there has been proposed a method of purifying fuel oil from renewable biological resources including botanical resources (so-called biomass) (see PTL 1). Such fuel oil is called bio fuel and is expected as a substitute for fossil resources-derived fuel oil in future since it does not cause increase of the total carbon dioxide emission.

Not only in the field of fuel oil but also in the other field of electric home appliances, sundry articles, automobiles, etc., various fossil resources-derived compounds have been used, and, in the other field, as well as the field of fuel oil, a method for producing compounds from biomass as substitutes for compounds using fossil resources as the starting material is desired for reducing the dependence on fossil resources. As one example, in the field of automobiles, also desired is a method for producing compounds to be tire materials from biomass.

Citation List

Patent Literature

PTL 1: JP-A 2009-046661

Summary of Invention

Technical Problem

The present invention is directed to providing an antioxidant synthetized from biological resources including botanical resources, a rubber composition containing the antioxidant, and a tire using the rubber composition.

Technical Solution

The present invention provides:

[1] An antioxidant synthesized using biological resources including botanical resources, wherein:

the value of $\delta$13C of the antioxidant is from -30‰ to -26‰, or -22‰ or more;

[2] The antioxidant according to [1], wherein the value of $\delta$13C is from -28.5‰ to -26.5‰;
[3] An antioxidant synthesized using biological resources including botanical resources, wherein the value of $\Delta$14C of the antioxidant is from -75‰ to -225‰;
[4] An antioxidant synthesized using biological resources including botanical resources, wherein the disintegration per minute per gram weight value of $^{14}$C of the antioxidant is 0.1 dpm/gC or more;
[5] The antioxidant according to any of [1] to [4], wherein the antioxidant is synthesized using, as the starting material, biomethane obtained from biological resources including botanical resources;
[6] The antioxidant according to any of [1] to [5], wherein the antioxidant is synthesized using, as the starting material, biobenzene obtained from biological resources including botanical resources;
[7] The antioxidant according to any of [1] to [6], wherein the antioxidant is at least one selected from the group consisting of N-phenyl-N'-1,3-dimethylbutyl-p-phenylenediamine and polymerized 2,2,4-trimethyl-1,3-dlhydroquinoline;
[8] The antioxidant according to any of [1] to [7], wherein the antioxidant is synthesized using acetone obtained from biological resources including botanical resources;
[9] The antioxidant according to any of [1] to [8], wherein the antioxidant is synthesized using methyl isobutyl ketone obtained from biological resources including botanical resources;
[10] A rubber composition including the antioxidant of any of [1] to [9];
[11] A tire including the rubber composition of [10].

Advantageous Effects of Invention

According to the present invention, there are provided an antioxidant synthesized from biological resources including botanical resources, a rubber composition containing the antioxidant, and a tire using the rubber composition.

Brief Description of Drawings

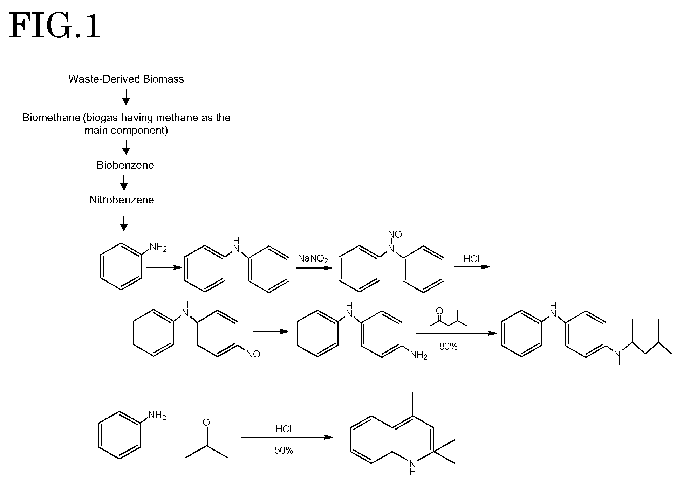

Fig. 1 is an explanatory view explaining methods for synthesizing antioxidants from biological resources including botanical resources.

Description of Embodiments

Embodiments of the antioxidant of the present invention are described in detail hereinunder.

[Antioxidant]

The antioxidant of the first embodiment of the present invention is an antioxidant synthesized from biological resources including botanical resources, wherein the value of $\delta$13C of the antioxidant is from -30‰ to -26‰, or -22‰ or more. Here, the value of $\delta$13C of the antioxidant is measured with a stable isotope ratio measuring apparatus.

$\delta$13C indicates the ratio of stable isotope in a substance. $\delta$13C is an index that indicates how and in what degree the ratio of $^{13}$C to $^{12}$C, $^{13}$C/$^{12}$C in the intended substance deviates from the isotope ratio in a reference sample (fossils of belemnites from the Cretaceous period), and the ratio is expressed by ‰ (permillage). A value (negative value) of $\delta$13C remoter from zero means that the ratio of $^{13}$C in the substance is lower.

A light isotope diffuses faster than a heavy isotope and is more reactive, and for example, it is known that, in the case of the carbon atom of carbon dioxide in the air that has been taken in a plant through photosynthesis, $^{12}$C is more easily fixed in a plant than $^{13}$C.

Specifically, regarding the carbon atoms taken in a plant, the amount of $^{12}$C is relatively larger and that of $^{13}$C is smaller as compared with the case of the carbon atoms in the air. Accordingly, the stable isotope ratio of carbon ($\delta$13C) taken in a plant is lower than the stable isotope ratio of carbon existing in the air.

The isotope ratio change in that manner is called isotopic fractionation and is expressed as $\Delta$13C ($\Delta$13C is discriminated from $\delta$13C).

$$\Delta13C = (\delta13C \text{ in air}) - (\delta13C \text{ in sample})$$

Accordingly, from the value of $\delta$13C of the antioxidant, the substance from which the antioxidant has been derived can be specified.

The value of $\delta$13C of the antioxidant is preferably within a range of from -21‰ to -12‰ The value of $\delta$13C of the antioxidant is more preferably within a range of from -28.5‰ to -26.5‰.

The antioxidant of the second embodiment of the present invention is an antioxidant synthesized from biological resources including botanical resources, wherein the value of $\Delta$14C of the antioxidant is from -75‰ to -225‰.

The antioxidant of the third embodiment of the present invention is an antioxidant synthesized from biological resources including botanical resources, wherein the disintegration per minute per gram weight value of $^{14}$C of the antioxidant is 0.1 dpm/gC or more.

Here, the value of $\Delta$14C is a value converted into the $^{14}$C concentration ($^{14}$AN) with the assumption that the carbon in a sample is $\delta$13C = -25.0 ‰. The value of $\delta$13C of the antioxidant is measured with a stable isotope ratio measuring apparatus.

$\Delta$14C is further calculated from the above-mentioned value of $\delta$13C, as follows.

$$\delta14C = [(^{14}As - ^{14}AR)/^{14}AR] \times 1000 \qquad (1)$$

$$\delta13C = [(^{13}As - ^{13}APDB)/^{13}APDB] \times 1000 \qquad (2)$$

wherein:

$^{14}$As: $^{14}$C concentration of sample carbon: $(^{14}C/^{12}C)$s or $(^{14}C/^{13}C)$s,

$^{14}$AR: $^{14}$C concentration of modern standard reference: $(^{14}C/^{12}C)$R or $(^{14}C/^{13}C)$R,

$^{13}$As: $^{13}$C concentration of sample carbon: $(^{13}C/^{12}C)$s,

$^{13}$APDB: $^{13}$C concentration of fossils of belemnites from the Cretaceous period (PDB): $(^{13}C/^{12}C)$DB.

The $^{14}$C concentration in the formula (1) is calculated through conversion on the basis of the measured value of δ13C and according to the following formula.

$$^{14}AN = {}^{14}As \times (0.975/(1 + \delta13C/1000))^2 \text{ (wherein, as } {}^{14}As, \text{ used is } {}^{14}C/{}^{12}C),$$

(wherein, as $^{14}$As, used is $^{14}$C/$^{12}$C), or

$$^{14}AN = {}^{14}As \times (0.975/(1 + \delta13C/1000)) \text{ (wherein, as } {}^{14}As, \text{ used is } {}^{14}C/{}^{13}C).$$

(wherein, as $^{14}$As, used is $^{14}$C/$^{13}$C).

From the above,

$$\Delta14C = [({}^{14}AN - {}^{14}AR)/{}^{14}AR] \times 1000 \text{ (‰)}$$

The value of Δ14C, from -75‰ to -225‰ of the antioxidant is on the same level as that of Δ14C of the carbon in carbon dioxide in the current air, and means that the carbon is one contained in an organic substance fixed in a currently growing plant.

The half-life period of radioactive carbon $^{14}$C is about 5730 years, and the carbon contained in fossil resources does not include $^{14}$C. Δ14C of fossil resources-derived butadiene is -1000‰ or so.

Accordingly, from the value of Δ14C, or the disintegration per minute per gram weight value, the value of δ13C of the antioxidant, the substance from which the antioxidant has been derived can be specified.

The antioxidant synthesized from biological resources including botanical resources is hereinunder referred to as a bio-derived antioxidant.

As the bio-derived antioxidant, usable are amine antioxidants and quinoline antioxidants which have a value of δ13C satisfying the above-mentioned range. As the bio-derived antioxidant, also usable are amine antioxidants and quinoline antioxidants which have a value of Δ14C satisfying a range of from -75‰ to -225‰ or a disintegration per minute per gram weight value of $^{14}$C satisfying a range of 0.1 dpm/gC or more.

Examples of the amine antioxidants include N-phenyl-N'-1,3-dimethylbutyl-p-phenylenediamine, N-phenyl-N'-isopropyl-p-phenylenediamine, alkylated diphenylamine, 4,4'-(α,α'-dimethylbenzyl)diphenylamine, N-phenyl-N'-(3-methacryloyloxy-2-hydroxypropyl-p-phenylenediamine, N-(1-methylheptyl)-N'-phenyl-p-phenylenediamine, phenyl-α-naphtylamine, octylated diphenylamine and derivatives thereof, N,N'-diphenyl-p-phenylenediamine, N,N'-diallyl-p-phenylenediamine, N,N'-di-β-naphthyl-p-phenylenediamine, etc.

Examples of the quinoline antioxidants include Polymerized 2,2,4-trimethyl-1,3-dihydroquinoline, 6-ethoxy-2,2,4-trimethyl-1,2-dihydroquinoline, 6-dodecyl-2,2,4-trimethyl-1,2-dihydroquinoline, etc.

One alone or two or more of the above-mentioned bio-derived antioxidants may be used either singly or as combined. Of the above-mentioned bio-derived antioxidants, preferred is at least one selected from the group consisting of N-phenyl-N'-1,3-dimethylbutyl-p-phenylenediamine and polymerized 2,2,4-trimethyl-1,3-dihydroquinoline.

The content of the bio-derived antioxidant relative to the total mass of the antioxidant is preferably from 10 to 100 mass%.

In addition to the above-mentioned bio-derived antioxidants, there are also mentioned phenolic antioxidants, organic phosphite antioxidants, thioether antioxidants and the like, which have a value of δ13C satisfying the above-mentioned range, a value of Δ14C satisfying a range of from -75‰ to -225‰ or a disintegration per minute per gram weight value of $^{14}$C satisfying a range of 0.1 dpm/gC or more.

[Method for synthesis of bio-derived antioxidant]

<Synthesis method>

Regarding the bio-derived antioxidant, methods for synthesizing bio-derived N-phenyl-N'-1,3-dimethylbutyl-p-phenylenediamine and Polymerized 2,2,4-trimethyl-1,3-dihydroquinoline are described with reference to Fig. 1.

Fig. 1 is an explanatory view explaining methods for synthesizing antioxidants from biological resources including botanical resources.

The bio-derived antioxidants can be synthesized from a starting material, methane obtained from biological resources including botanical resources (hereinafter referred to as biomethane) via benzene.

(Biomass → biomethane: methane fermentation)

First, biomethane is synthesized from biomass through methane fermentation.

The biological resources to be the starting material for biobenzene include wastes-derived biomass such as garbage, food wastes, domestic animal wastes, sludge, plant wastes, etc. It is known that these organic materials are decomposed by microorganisms to give biogas (methane gas/carbon dioxide = 60/40, additionally containing a trace of hydrogen sulfide). Purifying biogas gives high-purity methane gas.

(Biomethane → biobenzene: Mo/ZSM-5 catalyst)

Next, biobenzene is synthesized from biomethane. A methane conversion rate of from 6 to 12% has been reported using a fixed-bed flow reactor at 750°C under 3 atmospheres and using a 6% Mo/ZSM-5 catalyst (Japanese Patents 3755955, 3755968, 3745885, 3835765, etc.).

(Production of bio-derived N-phenyl-N'-1,3-dimethylbutyl-p-phenylenediamine, and Polymerized 2,2,4-trimethyl-1,3-dihydroquinoline)

As shown in Fig. 1, N-phenyl-N'-1,3-dimethylbutyl-p-phenylenediamine can be obtained by reacting N-phenyl-p-phenylenediamine obtained from aniline produced from bio-derived benzene, and methyl isobutyl ketone.

Also, Polymerized 2,2,4-trimethyl-1,3-dihydroquinoline can be obtained by reacting aniline produced from bio-derived benzene, and acetone.

Here, a part of the starting material to be used in the process of synthesizing the bio-derived antioxidant may be fossil resources-derived resources, or may also be biological resources including botanical resources. In addition, the starting material may also be a mixture of a starting material derived from fossil resources and a starting material derived from biological resources including botanical resources.

From the viewpoint of the discoloration resistance and the cracking resistance of the rubber composition and the tire using the resultant compound, it is desirable that fossil resources-derived resources are used as a part of the starting material.

For example, the above-mentioned methyl isobutyl ketone and acetone may be bio-derived ones. A production method for bio-derived acetone and a production method for bio-derived methyl isobutyl ketone are described hereinunder.

<Bio-derived acetone>

Examples of the production method for bio-derived acetone include a method of destructive distillation of calcium acetate, and a method of acetone/butanol fermentation.

In the method of destructive distillation of calcium acetate, first, calcium acetate is synthesized from acetic acid obtained through thermal decomposition of biomass or oxidative fermentation of ethanol, and calcium carbonate. The resultant calcium acetate is destructively distilled (thermally decomposed) to give acetone.

$$CaCO_3 + CH_3COOH \rightarrow Ca(OCOCH_3)_2 + H_2O + CO_2$$

$$Ca(OCOCH_3)_2 \rightarrow CaCO_3 + CH_3COCH_3$$

Specifically, acetone is obtained from calcium acetate according to the method disclosed in the following literature 1, 2.

Literature 1: E. G. R. Ardagh, A.D. Barbour, G. E. McClelian, E.W McBride, Distillation of Acetate of Lime, Ind. Eng. Chem., 1924, 16 (11), pp 1133-1139
Literature 2: LF Goodwin, E. T. Sterne, Losses Incurred in the Preparation of Acetone by the Distillation of Acetate of Lime, Industrial & Engineering Chemistry, 1920, 12(3), 240-243

On the other hand, according to an acetone/butanol fermentation method, acetone is obtained from a saccharide according to the following formula.

$$95C_6H12O_6 \rightarrow 60C_4H_9OH + 30CH_3COCH_3 + 10C_2H_4OH + 220CO_2 + 12OH_2 + 30H_2O$$

<Bio-derived methyl isobutyl ketone (MIBK)>

Bio-derived methyl isobutyl ketone may be produced using the above-mentioned bio-derived acetone as a starting material via the following steps a to c.

a. Two molecules of acetone are aldol-reacted to obtain diacetone alcohol.
b. Diacetone alcohol dehydrates to be converted into mesityl oxide.
c. Mesityl oxide is hydrogenated to obtain methyl isobutyl ketone.

Specifically, methyl butyl ketone may be produced according to the method disclosed in the following literature 3.
Literature 3: Organic Syntheses, Coll. Vol. 1, p. 199 (1941); Vol. 1, p. 45 (1921)

[Rubber composition]

The rubber composition of this embodiment of the present invention contains the bio-derived antioxidant of the present invention. The rubber composition further contains other additives such as rubber component, inorganic filler, carbon black, vulcanization accelerator, etc. The rubber composition shall contain the bio-derived antioxidant, and the other components than the antioxidant can be suitably selected in accordance with the intended purpose. Preferably, the other components than the bio-derived antioxidant are substituted with bio-derived components.

<Rubber component>

The rubber component capable of being incorporated in the rubber composition of the present invention is not specifically limited, and may be suitably selected in accordance with the intended purpose.
Examples of the rubber component include a butadiene polymer, a natural rubber, an epoxidated natural rubber, various types of a butadiene rubber, various types of a styrene-butadiene copolymer rubber, an isoprene rubber, a butyl rubber, a bromide of a copolymer of isopropylene and p-methylstyrene, a halogenated butyl rubber, an acrylonitrile-butadiene rubber, a chloroprene rubber, an ethylene-propylene copolymer rubber, an ethylene-propylene-diene copolymer rubber, a styrene-isoprene copolymer rubber, a styrene-isoprene-butadiene copolymer rubber, an isoprene-butadiene copolymer rubber, a chlorosulfonated polyethylene, an acryl rubber, an epichlorohydrin rubber, a polysulfide rubber, a silicone rubber, a fluororubber, urethane rubber, etc. One alone or two or more of these may be used either singly or as combined.

<Biomass-derived rubber component>

The rubber component to be incorporated in the rubber composition of the present invention is preferably a rubber component synthesized from biological resources including botanical resources.

(Biobutadiene rubber)

One example of the rubber component synthesized from biological resources including botanical resources is biobutadiene rubber. The biobutadiene rubber is produced from a biobutadiene monomer obtained through synthesis from bioethanol as a starting material that is synthesized from biological resources including botanical resources.
Bioethanol produced from biomass is, while kept under heat, brought into contact with a composite metal oxide containing at least magnesium and silicon as metal elements to obtain a mixture containing a biobutadiene monomer component. From the mixture, the biobutadiene monomer component is extracted out, and using the extracted biobutadiene monomer component, a butadiene polymer is produced.
The method for producing the butadiene polymer is not specifically limited, for which is employable any of a solution polymerization method, a vapor-phase polymerization method and a bulk polymerization method. Of those, preferred is a solution polymerization method. The polymerization mode may be any of a batch mode or a continuous mode. In addition, as the polymerization method, also employable are an anion polymerization method using an organic metal compound as a polymerization initiator, and a coordination polymerization method using a rare earth metal compound as a polymerization initiator.

The butadiene polymer may also be a copolymer synthesized from the biobutadiene monomer and a monomer copolymerizable with the biobutadiene monomer. Examples of the monomer copolymerizable with the biobutadiene monomer include conjugated diene compounds, aromatic vinyl compounds, etc. Examples of the conjugated diene compound include 1,3-pentadiene, 2,3-dimethylbutadiene, 2-phenyl-1,3-butadiene, 1,3-hexadiene, etc. In this embodiment, isoprene is excluded from the conjugated diene compound copolymerizable with the biobutadiene monomer.

Examples of the aromatic vinyl compound include styrene, p-methylstyrene, m-methylstyrene, p-tert-butylstyrene, $\alpha$-methylstyrene, chloromethylstyrene, vinyltoluene, etc.

The monomer copolymerizable with the biobutadiene monomer may be any of those synthesized from biological resources including botanical resources, and those derived from petrochemistry. In addition, the monomer may contain a given amount of an ordinary butadiene monomer which is not derived from bioethanol.

<Reinforcing filler>

If desired, a reinforcing filler may be incorporated in the rubber composition. Examples of the reinforcing filler include carbon black, inorganic filler, etc. Preferred is at least one selected from the group consisting of carbon black and inorganic filler.

The inorganic filler is not specifically limited, and may be suitably selected in accordance with the intended purpose. Examples of the inorganic filler include silica, aluminium hydroxide, clay, alumina, talc, mica, kaolin, glass balloon, glass bead, calcium carbonate, magnesium carbonate, magnesium hydroxide, calcium carbonate, magnesium oxide, titanium oxide, potassium titanate, barium sulfate, etc. One alone or two or more of these may be used either singly or as combined. In the case where the inorganic filler is used, a silane coupling agent may be suitably used.

The content of the reinforcing filler is not specifically limited, and may be suitably selected in accordance with the intended purpose. Preferably, the reinforcing filler is contained in an amount of from 5 parts by mass to 200 parts by mass relative to 100 parts by mass of the rubber component.

The content of the reinforcing filler of 5 parts by mass or more provides the effect of reinforcing the rubber composition. The content of 200 parts by mass or less facilitates mixing of the rubber component and the reinforcing filler and improves the performance of the rubber composition.

<Other additives>

As the other additive, there is mentioned an antioxidant except the bio-derived antioxidant. If desired, known additives such as a vulcanization accelerator, a reinforcing agent, a softening agent, filler, a vulcanization aid, a colorant, a flame retardant, a lubricant, a foaming agent, a plasticizer, a processing aid, an oxidation inhibitor, a scorching inhibitor, a UV inhibitor, antistatic agent, a discoloration inhibitor and others may be used in accordance with the intended use thereof. The other additives may also be those synthesized from biological resources including botanical resources.

[Crosslinked rubber composition]

The rubber composition of the present invention may contain a crosslinking agent in addition to the bio-derived antioxidant of the present invention, the rubber component, the inorganic filler, carbon black and other additives. The rubber composition containing a crosslinking agent can form a crosslinked rubber composition.

<Crosslinking agent>

The crosslinking agent usable in producing the crosslinked rubber composition is not specifically limited, and may be suitably selected in accordance with the intended purpose. For example, there are mentioned a sulfur crosslinking agent, an organic peroxide crosslinking agent, an inorganic crosslinking agent, a polyamine crosslinking agent, a resin crosslinking agent, a sulfur compound crosslinking agent, an oxime-nitrosamine crosslinking agent, sulfur, etc. Of those, preferred is use of a sulfur crosslinking agent in the case of the rubber composition for tires.

The content of the crosslinking agent is not specifically limited, and may be suitably selected in accordance with the intended purpose. Preferably, the crosslinking agent is contained in an amount of from 0.1 parts by mass to 20 parts by mass relative to 100 parts by mass of the rubber component.

When the content of the crosslinking agent is 0.1 parts by mass or more, the composition can be crosslinked to exhibit the desired effects. When the content is 20 parts by mass or less, the composition can be prevented from being overcrosslinked during kneading to detract from the physical properties of the vulcanized products.

[Tire]

The tire of the present invention contains the rubber composition or the crosslinked rubber composition of the present invention. In the tire of the present invention, the other components than the rubber composition or the crosslinked rubber composition may be suitably selected in accordance with the intended purpose.
The site of the tire to which the rubber composition or the crosslinked rubber composition of the present invention is applied is, for example, tread, base tread, side wall, side-reinforcing rubber, bead filler, etc. However, the application site is not limited to these.
The tire of the present invention can be produced using ordinary methods. For example, members for use in ordinary tire production such as a carcass layer, a belt layer, a tread layer and the like formed of unvulcanized rubber are layered sequentially on a drum for tire production, and then the drum is drawn away to obtain a green tire. Next, the green tire is heated and vulcanized according to an ordinary method to obtain a desired tire.

[Other use than tire]

Besides the application for tires, the rubber composition of the present invention or the crosslinked rubber composition of the present invention can be used for vibration-proof rubber, seismic isolation rubber, belt (conveyor belt), rubber crawler, various hoses, moran, golf ball, shoe sole, fender, rubber boot, etc.

Examples

Hereinunder the present invention is described in more detail with reference to Examples, but the present invention is not whatever limited to the following Examples.

[Evaluation Method]

<Measurement of $\delta$13C>

The value of $\delta$13C of bio-derived antioxidant produced from biomethane was measured using a stable isotope ratio measuring apparatus.

<Measurement of $\Delta$14C>

The value of $\delta$13C of antioxidant was measured using a stable isotope ratio measuring apparatus, and according to the above-mentioned conversion method, $\Delta$14C thereof was calculated.

<Measurement of disintegration per minute per gram weight of $^{14}$C>

The disintegration per minute per gram weight value of $^{14}$C of antioxidant was measured according to an accelerator mass spectrometry (AMS) and a liquid scintillation counting method (LSC).

<Evaluation of vulcanization rate>

For the vulcanization rate, measured was the value of Tc(90) at 155°C according to the method defined in JIS K6300-2:2001. For the measurement, used was "Curelastometer Type W" manufactured by JSR Corporation, and the value was expressed as an index taking the value of the vulcanized rubber of Comparative Example 1 as 100.

<Evaluation of 300% elongation tensile stress>

The value of 300% elongation tensile stress was measured according to JIS K 6251. The 300% elongation tensile stress was expressed as an index taking the value of the vulcanized rubber of Comparative Example 1 as 100.

<Evaluation of antioxidant effect>

A test piece was tested in the ozone degradation test according to JIS K 6259:2004 under the condition of a temperature of 40°C, an ozone concentration of 50 pphm and a 20% elongation. After 50 hours, the test piece was checked for the state of degradation, and evaluated based on the number of the cracks formed therein. The value was expressed as an index taking the value of the vulcanized rubber of Comparative Example 1 as 100. The same test piece was tested in the same ozone degradation test after 1 year and further after 2 years, and checked for the state of degradation. The value was expressed as an index taking the value of the vulcanized rubber of Comparative Example 1 as 100.

<Discoloration resistance>

The discoloration resistance was evaluated using a colorimeter (model name "NF333", manufactured by Nippon Denshoku Industries Co., Ltd.). The degree of discoloration of the test piece formed of a vulcanized rubber composition was measured. The found data were expressed as L*, a* and b*. L* means brightness; a* and b* each mean tone. The sample whose a* and b* are 0 is colorless; the sample whose a* is more positive has more of a red hue while the sample whose a* is more negative has more of a green hue, and the sample whose b* is more positive has more of a yellow hue while the sample whose b* is more negative has more of a blue hue.

The value b* and the visible color of a test piece just after vulcanization were compared with the value b* and the visible color of the test piece after a shelf test performed by placing the test piece under such a condition that the test piece could be exposed to direct sunlight for a specific period of time in a day under an outdoor roof under which the test piece was not exposed to rainfall, in a summer season, and from the comparison, the degree of discoloration of the sample was evaluated. The degree of discoloration was expressed by 5 ranks. Specifically, the case where the degree of discoloration was recognized seriously was given 5, the case where discoloration was recognized in a half of more of the whole was given 4, the case where discoloration was recognized in a half or less of the whole was given 3, the case where discoloration was recognized only slightly was given 2, and the case where discoloration was not recognized was given 1.

[Biobutadiene polymer]

As the biobutadiene polymer of a rubber component, used was a biobutadiene polymer obtained through polymerization of a biobutadiene monomer synthesized from regenerable biological resources including botanical resources (biomass).

<Production of biobutadiene polymer>

(Production of catalyst)

As the catalyst, used was a composite oxide of silica-magnesia synthesized according to a sol-gel method. The production method for the catalyst is as follows. First, 100 mL of a 14% ammonia aqueous solution was dropwise added to a solution of $Mg(NO_3)_2 \cdot 6H_2O$ (64 g) dissolved in 100 mL of distilled water to synthesize a gel of $Mg(OH)_2$. On the other hand, 12.5 mL of 1.38 M nitric acid and 50 mL of an aqueous solution of 14% ammonia were dropwise added to a solution of $Si(OC_2H_5)_4$ (55 mL) dissolved in 150 mL of ethanol to synthesize a gel of $Si(OH)_4$. The resultant $Mg(OH)_2$ gel was washed with distilled water and then filtered through suction, and the $Si(OH)_4$ gel was washed with ethanol and filtered under suction. These two gels were mixed, and the gel mixture was dried with air, then dried at 80°C, and fired at 500°C in a $N_2$ atmosphere to produce a silica-magnesia composite oxide catalyst.

(Production of biobutadiene monomer)

As the starting substance, used was bioethanol obtained through fermentation of starch of sugar cane, tapioca and corn with yeast.

The catalyst produced according to the above-described method and the above-described bioethanol were brought into contact with each other to produce a biobutadiene monomer.

As the reaction apparatus, used was a fixed-bed gas-flow reactor. The produced silica-magnesia composite oxide catalyst was charged in a quartz-made reaction tube, and heat-treated in a carrier gas atmosphere ($N_2$; gas flow rate 66 mL/min) at 500°C for 2 hours as pretreatment.

After the treatment, the temperature of the catalyst tube was lowered to a reaction temperature, and bioethanol gas diluted with $N_2$ was introduced thereinto. The reaction temperature was 350°C or 450°C.

The gas formed through the reaction was processed for separation as mentioned below to thereby collect a mixture containing a biobutadiene monomer. First, the formed gas was bubbled into hexane so that the intended product, biobutadiene monomer was dissolved in the solvent. The collected butadiene solution was dried and purified, and the impurities of ethanol, acetaldehyde, diethyl ether, ethoxyethylene and ethyl acetate were further removed.

(Production of biobutadiene polymer)

In a nitrogen atmosphere, 2.4 kg of cyclohexane, and a monomer solution of 300 g of the biobutadiene monomer produced on the basis of the above-described production example for biobutadiene monomer was put into a 5-liter autoclave purged with nitrogen. A catalyst composition previously prepared by reacting a cyclohexane solution of neodymium versatate (0.09 mmol), a toluene solution of methyl aluminoxanes (MAO, 3.6 mmol), a toluene solution of diisobutylaluminium hydride (DIBAH, 5.5 mmol) and diethylaluminium chloride (0.18 mmol), and 1,3-butadiene (4.5 mmol), at 40°C for 30 minutes, followed by aging, was put into the autoclave as a catalyst component, and the monomer was polymerized at 60°C for 60 minutes. 200 g of the polymer solution was extracted into a methanol solution containing 0.2 g of 2,4-di-tert-butyl-p-cresol to thereby stop the polymerization, the solvent was removed through steam stripping, and the residue was dried with a roll at 110°C to obtain a biobutadiene polymer.

[Production of bio-derived antioxidant]

<Production Example 1>

Biogas (methane gas/carbon dioxide = 60/40) was obtained by decomposing biomass such as garbage, food wastes, domestic animal wastes, sludge, plant wastes and the like, with microorganisms. Next, the resultant biogas was purified to obtain high-purity methane gas.
Next, using a fixed-bed flow reactor and using a 6% Mo/ZSM-5 catalyst, biobenzene was synthesized from biomethane under the condition of 750°C and 3 atmospheres. Next, N-phenyl-p-phenylenediamine obtained from aniline produced from bio-derived benzene was reacted with bio-derived methyl isobutyl ketone to obtain an antioxidant B, N-phenyl-N'-1,3-dimethylbutyl-p-phenylenediamine.

<Production Example 2>

An antioxidant C, N-phenyl-N'-1,3-dimethylbutyl-p-phenylenediamine was obtained according to the same reaction as in Production Example 1, except that in Production Example 1, N-phenyl-p-phenylenediamine was reacted with a fossil material-derived methyl isobutyl ketone.

[Examples 1, 3 and Comparative Example 1]

A rubber composition was prepared according to the compounding formulation shown in Table 1, and vulcanized at 145°C for 33 minutes to obtain a vulcanized rubber. In Examples 1 and 3, the above-prepared biobutadiene polymer was used as the rubber component, and in Comparative Example 1, an already-existing butadiene rubber was used.
The antioxidants B and C are ones produced according to the above-described production method.
The antioxidant A used in Comparative Example 1 is one derived from fossil resources, and is 6PPD "Noclac 6C" manufactured by Ouchi Shinko Chemical Industrial Co., Ltd.
The vulcanized rubber obtained in each of Examples 1 and 3 and Comparative Example 1 was analyzed and evaluated for the vulcanization rate, the 300% elongation tensile stress, the cracking resistance and the discoloration resistance thereof. The results are shown in Table 2.

Table 1

|  | Amount (part by mass) |
|---|---|
| Butadiene polymer | 50 |
| Natural rubber | 50 |
| Carbon black*1 | 50 |
| Stearic acid | 2 |
| Wax*2 | 2 |
| Antioxidant | 3 |
| Zinc oxide | 3 |
| Vulcanization accelerator DPG*3 | 0.3 |
| Vulcanization accelerator DM*4 | 0.3 |

(continued)

| | Amount (part by mass) |
|---|---|
| Vulcanization accelerator CBS*5 | 0.8 |
| Sulfur | 2 |

*1: Nitrogen adsorption specific surface area; 42 m$^2$/g, Seast F, manufactured by Tokai Carbon Co., Ltd.
*2: Microcrystalline wax, Ozoace 0701, manufactured by Nippon Seiro Co., Ltd.
*3: Vulcanization accelerator DPG: Nocceler D, manufactured by Ouchi Shinko Chemical Industrial Co., Ltd.
*4: Vulcanization accelerator DM: Nocceler DM, manufactured by Ouchi Shinko Chemical Industrial Co., Ltd.
*5: Vulcanization accelerator CBS: Sanceler CM-G, manufactured by Sanshin Chemical Industry Co., Ltd.

Table 2

| | | Example 1 | Example 3 | Comparative Example 1 |
|---|---|---|---|---|
| Antioxidant | type | B | C | A |
| | $\delta$13C (‰) | -29 | -27 | -23 |
| Vulcanization rate (index) | | 100 | 100 | 100 |
| 300% Modulus (index) | | 100 | 100 | 100 |
| Cracking resistance (index) | | 100 | 100 | 100 |
| Cracking resistance after 1 year (index) | | 104 | 104 | 100 |
| Cracking resistance after 2 years (index) | | 108 | 107 | 100 |
| b* after shelf test | | 3 | 2 | 1 |
| Discoloration after shelf test | | 5 | 2 | 1 |

From Table 2, the value of $\delta$13C of the antioxidant B incorporated in Example 1 was -29‰, the value of $\delta$13C of the antioxidant C incorporated in Example 3 was -27‰, and the value of $\delta$13C of the antioxidant (type A) incorporated in Comparative Example 1 was -23‰.

From Table 2, it is apparent that the indices of the vulcanization rate, the 300% elongation tensile stress and the cracking resistance of the vulcanized rubber obtained by vulcanizing the rubber composition containing the biobutadiene rubber and the bio-derived antioxidant of each of Examples 1 and 3 were on the same level as the indices of the vulcanization rate, the 300% elongation tensile stress and the cracking resistance, respectively, of the vulcanized rubber obtained by vulcanizing the rubber composition containing the oil-derived butadiene rubber and the antioxidant of Comparative Example 1, but the cracking resistance after 1 year and the cracking resistance after 2 years of the vulcanized rubber of each of Examples 1 and 3 were superior to those of the vulcanized rubber of Comparative Example 1 using the antioxidant A. In addition, it is also apparent that the discoloration resistance of the tire produced using the antioxidant in Example 1 or 3 was better than that in Comparative Example 1.

The tires produced using the bio-derived antioxidant were prevented from being browned on the tire surface for a long period of time, that is, the tires are excellent in discoloration resistance. From this, it is apparent that the bio-derived antioxidant has good compatibility with the rubber component.

From the above, it is apparent that the vulcanized rubber containing the antioxidant synthesized from biological resources including botanical resources is superior to the vulcanized rubber containing the already-existing antioxidant in Comparative Example, in point of the vulcanization rate, the 300% elongation tensile stress, the cracking resistance and the discoloration resistance.

Further, it is apparent that the vulcanized rubber of Example 3 that contains the antioxidant C using oil resources-derived one as a part of the starting material is superior to the vulcanized rubber of Example 1 that contains the antioxidant B for which all the starting materials were bio-derived ones, in point of the discoloration resistance.

[Examples 2, 4 and Comparative Example 2]

A rubber composition was prepared according to the compounding formulation shown in Table 3 (using styrene-butadiene copolymer rubber (SBR) as the rubber component), and vulcanized at 145°C for 33 minutes to obtain a vulcanized rubber of Examples 2, 4 and Comparative Example 2.

The antioxidant incorporated in Example 2 is one synthesized from biological resources including botanical resources. On the other hand, the antioxidant incorporated in Comparative Example 2 is one derived from oil resources. The vulcanized rubber obtained in each of Example 2 and Comparative Example 2 was analyzed and evaluated for the vulcanization rate, the 300% elongation tensile stress, the cracking resistance and the discoloration resistance thereof. The results are shown in Table 4.

Table 3

| | Amount (part by mass) |
|---|---|
| SBR*6 | 100 |
| Carbon black*7 | 10 |
| Silica*8 | 50 |
| Silane-coupling agent*9 | 7 |
| Aroma oil | 36 |
| Stearic acid | 2 |
| Antioxidant | 1 |
| Zinc oxide | 3 |
| Vulcanization accelerator DPG*10 | 1 |
| Vulcanization accelerator DM*11 | 1 |
| Vulcanization accelerator NS*12 | 1 |
| Sulfur | 1.5 |

*6: #1500, manufactured by JSR Corporation
*7: Nitrogen adsorption specific surface area; 93 $m^2$/g, Seast KH, manufactured by Tokai Carbon Co., Ltd.
*8: Nipsil AQ, manufactured by Tosoh Silica Corporation
*9: Si75, manufactured by Evonik Degussa Corporation
*10: Vulcanization accelerator DPG: Nocceler D, manufactured by Ouchi Shinko Chemical Industrial Co., Ltd.
*11: Vulcanization accelerator DM: Nocceler DM, manufactured by Ouchi Shinko Chemical Industrial Co., Ltd.
*12: Vulcanization accelerator NS: Nocceler NS, manufactured by Ouchi Shinko Chemical Industrial Co., Ltd.

Table 4

| | | Example 2 | Example 4 | Comparative Example 2 |
|---|---|---|---|---|
| Antioxidant | type | B | C | A |
| | δ13C (‰) | -29 | -27 | -23 |
| Vulcanization rate (index) | | 100 | 100 | 100 |
| 300% Modulus (index) | | 100 | 100 | 100 |
| Cracking resistance (index) | | 100 | 100 | 100 |
| Cracking resistance after 1 year (index) | | 103 | 103 | 100 |
| Cracking resistance after 2 years (index) | | 105 | 105 | 100 |
| b* after shelf test | | 3 | 2 | 1 |
| Discoloration after shelf test | | 5 | 2 | 1 |

From Table 4, the value of δ13C of the antioxidant B incorporated in Example 2 was -29‰, the value of δ13C of the antioxidant C incorporated in Example 4 was -27‰, and the value of δ13C of the antioxidant A incorporated in Comparative Example 2 was -23‰.

From Table 4, it is apparent that the indices of the vulcanization rate, the 300% elongation tensile stress and the cracking resistance of the vulcanized rubber obtained by vulcanizing the rubber composition containing the synthetic rubber and the bio-derived antioxidant of each of Examples 2 and 4 were on the same level as the indices of the vulcanization rate, the 300% elongation tensile stress and the cracking resistance, respectively, of the vulcanized rubber obtained by vulcanizing the rubber composition containing oil-derived synthetic rubber and the already-existing antioxidant of Comparative Example 2, but the cracking resistance after 1 year and the cracking resistance after 2 year of the vulcanized rubber of each of Examples 2 and 4 were superior to those of the vulcanized rubber of Comparative Example 2 using the antioxidant A. In addition, it is also apparent that the discoloration resistance of the tire produced using the antioxidant in each of Examples 2 and 4 was better than that in Comparative Example 2. The tires produced using the bio-derived antioxidant were prevented from being browned on the tire surface for a long period of time, that is, the tires are excellent in discoloration resistance. From this, it is apparent that the bio-derived antioxidant has good compatibility with the rubber component.

From the above, it is apparent that the vulcanized rubber containing the antioxidant synthesized from biological resources including botanical resources is superior to the vulcanized rubber containing the already-existing antioxidant in point of the vulcanization rate, the 300% elongation tensile stress, the cracking resistance and the discoloration resistance.

Further, it is apparent that the vulcanized rubber of Example 4 that contains the antioxidant C using oil resources-derived one as a part of the starting material is superior to the vulcanized rubber of Example 2 that contains the antioxidant B for which all the starting materials were bio-derived ones, in point of the discoloration resistance.

[Example 5, 7, Comparative Example 3]

A rubber composition was prepared according to the compounding formulation shown in Table 5, and vulcanized at 145°C for 33 minutes to obtain a vulcanized rubber. In Examples 5 and 7, the above-prepared biobutadiene polymer was used as the rubber component, and in Comparative Example 3, an already-existing butadiene rubber was used.

The antioxidants B and C are ones produced from biological resources including botanical resources according to the above-described production method.

The antioxidant A used in Comparative Example 1 is one derived from oil resources, and is 6PPD "Noclac 6C" manufactured by Ouchi Shinko Chemical Industrial Co., Ltd.

The vulcanized rubber obtained in each of Examples 5 and 7 and Comparative Example 3 was analyzed and evaluated for the vulcanization rate, the 300% elongation tensile stress, the cracking resistance and the discoloration resistance thereof. The results are shown in Table 6.

Table 5

| | Amount (part by mass) |
|---|---|
| Butadiene polymer | 50 |
| Natural rubber | 50 |
| Carbon black*21 | 50 |
| Stearic acid | 2 |
| Wax*22 | 2 |
| Antioxidant | 3 |
| Zinc oxide | 3 |
| Vulcanization accelerator DPG*23 | 0.3 |
| Vulcanization accelerator DM*24 | 0.3 |
| Vulcanization accelerator CBS*25 | 0.8 |
| Sulfur | 2 |
| *21: Nitrogen adsorption specific surface area; 42 m$^2$/g, Seast F, manufactured by Tokai Carbon Co., Ltd.<br>*22: Microcrystalline wax, Ozoace 0701, manufactured by Nippon Seiro Co., Ltd.<br>*23: Vulcanization accelerator DPG: Nocceler D, manufactured by Ouchi Shinko Chemical Industrial Co., Ltd.<br>*24: Vulcanization accelerator DM: Nocceler DM, manufactured by Ouchi Shinko Chemical Industrial Co., Ltd.<br>*25: Vulcanization accelerator CBS: Sanceler CM-G, manufactured by Sanshin Chemical Industry Co., Ltd. | |

Table 6

| | | Example 5 | Example 7 | Comparative Example 3 |
|---|---|---|---|---|
| Antioxidant | Type | B | C | A |
| | Δ14C (‰) | -100 | -200 | -1000 |
| | Disintegration per minute per gram weight of <sup>14</sup>C (dpm/gC) | 0.2 | 0.14 | 0.05 |
| Vulcanization rate (index) | | 100 | 100 | 100 |
| 300% Modulus (index) | | 100 | 100 | 100 |
| Cracking resistance (index) | | 100 | 100 | 100 |
| Cracking resistance after 1 year (index) | | 104 | 102 | 100 |
| Cracking resistance after 2 years (index) | | 108 | 105 | 100 |
| b* after shelf test | | 3 | 2 | 1 |
| Discoloration after shelf test | | 5 | 2 | 1 |

From Table 6, the value of Δ14C of the antioxidant B incorporated in Example 5 was -100‰, the value of disintegration per minute per gram weight of $^{14}$C thereof was 0.2 dpm/gC, the value of Δ14C of the antioxidant C incorporated in Example 7 was -200‰, the value of disintegration per minute per gram weight of $^{14}$C thereof was 0.14 dpm/gC, the value of Δ14C of the antioxidant A incorporated in Comparative Example 3 was -1000‰, and the value of disintegration per minute per gram weight of $^{14}$C thereof was 0.05 dpm/gC.

From Table 6, it is apparent that the indices of the vulcanization rate, the 300% elongation tensile stress and the cracking resistance of the vulcanized rubber obtained by vulcanizing the rubber composition containing the biobutadiene rubber and the bio-derived antioxidant of each of Examples 5 and 7 were on the same level as those of the vulcanization rate, the 300% elongation tensile stress and the cracking resistance, respectively, of the vulcanized rubber obtained by vulcanizing the rubber composition containing the oil-derived butadiene rubber and the antioxidant of Comparative Example 1, but the cracking resistance after 1 year and the cracking resistance after 2 years of the vulcanized rubber of each of Examples 5 and 7 were superior to those of the vulcanized rubber of Comparative Example 3 using the antioxidant A. In addition, it is also apparent that the discoloration resistance of the tires produced using the antioxidant in Examples 5 and 7 was better than that in Comparative Example 3.

The tires produced using the bio-derived antioxidant were prevented from being browned on the tire surface for a long period of time, that is, the tires are excellent in discoloration resistance. From this, it is apparent that the bio-derived antioxidant has good compatibility with the rubber component.

From the above, it is apparent that the vulcanized rubber containing the antioxidant synthesized from biological resources including botanical resources is superior to the vulcanized rubber containing the already-existing, oil-derived antioxidant, in point of the vulcanization rate, the 300% elongation tensile stress, the cracking resistance and the discoloration resistance.

Further, it is apparent that the vulcanized rubber of Example 7 that contains the antioxidant C using oil resources-derived one as a part of the starting material is superior to the vulcanized rubber of Example 5 that contains the antioxidant B for which all the starting materials were bio-derived ones, in point of the discoloration resistance.

[Examples 6, 8 and Comparative Example 4]

Δ rubber composition was prepared according to the compounding formulation shown in Table 7 (using styrene-butadiene copolymer rubber (SBR) as the rubber component), and vulcanized at 145°C for 33 minutes to obtain a vulcanized rubber of Examples 6, 8 and Comparative Example 4.

The antioxidant incorporated in each of Examples 6 and 8 is one synthesized from biological resources including botanical resources. On the other hand, the antioxidant incorporated in Comparative Example 4 is one derived from oil resources. The vulcanized rubber obtained in each of Examples 6 and 8 and Comparative Example 4 was analyzed and evaluated for the vulcanization rate, the 300% elongation tensile stress, the cracking resistance and the discoloration resistance thereof. The results are shown in Table 8.

Table 7

| | Amount (part by mass) |
|---|---|
| SBR*26 | 100 |
| Carbon black*27 | 10 |
| Silica*28 | 50 |
| Silane-coupling agent*29 | 7 |
| Aroma oil | 36 |
| Stearic acid | 2 |
| Antioxidant | 1 |
| Zinc oxide | 3 |
| Vulcanization accelerator DPG*30 | 1 |
| Vulcanization accelerator DM*31 | 1 |
| Vulcanization accelerator NS*32 | 1 |
| Sulfur | 1.5 |
| *26: #1500, manufactured by JSR Corporation<br>*27: Nitrogen adsorption specific surface area; 93 m²/g, Seast KH, manufactured by Tokai Carbon Co., Ltd.<br>*28: Nipsil AQ, manufactured by Tosoh Silica Corporation<br>*29: Si75, manufactured by Evonik Degussa Corporation<br>*30: Vulcanization accelerator DPG: Nocceler D, manufactured by Ouchi Shinko Chemical Industrial Co., Ltd.<br>*31: Vulcanization accelerator DM: Nocceler DM, manufactured by Ouchi Shinko Chemical Industrial Co., Ltd.<br>*32: Vulcanization accelerator NS: Nocceler NS, manufactured by Ouchi Shinko Chemical Industrial Co., Ltd. | |

Table 8

| | | Example 6 | Example 8 | Comparative Example 4 |
|---|---|---|---|---|
| Antioxidant | Type | B | C | A |
| | Δ14C (‰) | -100 | -200 | -1000 |
| | Disintegration per minute per gram weight of $^{14}$C (dpm/gC) | 0.2 | 0.14 | 0.05 |
| Vulcanization rate (index) | | 100 | 100 | 100 |
| 300% Modulus (index) | | 100 | 100 | 100 |
| Cracking resistance (index) | | 100 | 100 | 100 |
| Cracking resistance after 1 year (index) | | 103 | 101 | 100 |
| Cracking resistance after 2 years (index) | | 105 | 104 | 100 |
| b* after shelf test | | 4 | 1 | 1 |
| Discoloration after shelf test | | 4 | 3 | 1 |

From Table 8, the value of Δ14C of the antioxidant B incorporated in Example 6 was -100‰, the value of disintegration per minute per gram weight of $^{14}$C thereof was 0.2 dpm/gC, the value of Δ14C of the antioxidant B incorporated in Example 8 was -200‰, the value of disintegration per minute per gram weight of $^{14}$C thereof was 0.14 dpm/gC, the value of Δ14C of the antioxidant A incorporated in Comparative Example 4 was -1000‰, and the value of disintegration per minute per gram weight of $^{14}$C thereof was 0.05 dpm/gC.

From Table 8, it is apparent that the indices of the vulcanization rate, the 300% elongation tensile stress and the cracking resistance of the vulcanized rubber obtained by vulcanizing the rubber composition containing the oil-derived synthetic rubber and the bio-derived antioxidant of each of Examples 6 and 8 were on the same level as the indices of the vulcanization rate, the 300% elongation tensile stress and the cracking resistance, respectively, of the vulcanized rubber obtained by vulcanizing the rubber composition containing the oil-derived synthetic rubber and the already-existing antioxidant of Comparative Example 2, but the cracking resistance after 1 year and the cracking resistance after 2 years of the vulcanized rubber of each of Examples 6 and 8 were superior to those of the vulcanized rubber of Comparative Example 4 using the antioxidant A. In addition, it is also apparent that the discoloration resistance of the tire produced using the antioxidant in each of Examples 6 and 8 was better than that in Comparative Example 4.

The tires produced using the bio-derived antioxidant were prevented from being browned on the tire surface for a long period of time, that is, the tires are excellent in discoloration resistance. From this, it is apparent that the bio-derived antioxidant has good compatibility with the rubber component.

From the above, it is apparent that the vulcanized rubber containing the synthetic rubber and the antioxidant synthesized from biological resources including botanical resources in each of Examples 6 and 8 is superior to the vulcanized rubber containing the already-existing antioxidant, in point of the vulcanization rate, the 300% elongation tensile stress, the cracking resistance and the discoloration resistance.

Further, it is apparent that the vulcanized rubber of Example 8 that contains the antioxidant C using oil resources-derived one as a part of the starting material is superior to the vulcanized rubber of Example 6 that contains the antioxidant B for which all the starting materials were bio-derived ones, in point of the discoloration resistance.

## Claims

1. An antioxidant synthesized using biological resources including botanical resources, wherein:

   the value of $\delta$13C of the antioxidant is from -30‰ to -26‰, or -22‰ or more.

2. The antioxidant according to claim 1, wherein the value of $\delta$13C is from -28.5‰ to -26.5‰.

3. An antioxidant synthesized using biological resources including botanical resources, wherein:

   the value of $\Delta$14C of the antioxidant is from -75‰ to -225‰.

4. An antioxidant synthesized using biological resources including botanical resources, wherein:

   the disintegration per minute per gram weight value of $^{14}$C of the antioxidant is 0.1 dpm/gC or more.

5. The antioxidant according to any of claims 1 to 4, wherein the antioxidant is synthesized using, as the starting material, biomethane obtained from biological resources including botanical resources.

6. The antioxidant according to any of claims 1 to 5, wherein the antioxidant is synthesized using, as the starting material, biobenzene obtained from biological resources including botanical resources.

7. The antioxidant according to any of claims 1 to 6, wherein the antioxidant is at least one selected from the group consisting of N-phenyl-N'-1,3-dimethylbutyl-p-phenylenediamine and polymerized 2, 2, 4-trimethyl-1, 3-dihydroquinoline.

8. The antioxidant according to any of claims 1 to 7, wherein the antioxidant is synthesized using acetone obtained from biological resources including botanical resources.

9. The antioxidant according to any of claims 1 to 8, wherein the antioxidant is synthesized using methyl isobutyl ketone obtained from biological resources including botanical resources.

10. A rubber composition comprising the antioxidant of any of claims 1 to 9.

11. A tire comprising the rubber composition of claim 10.

# FIG.1

## INTERNATIONAL SEARCH REPORT

| International application No. |
| --- |
| PCT/JP2014/067283 |

A. CLASSIFICATION OF SUBJECT MATTER
*C09K15/18*(2006.01)i, *B60C1/00*(2006.01)i, *C08K5/18*(2006.01)i, *C08L45/00*
(2006.01)i

According to International Patent Classification (IPC) or to both national classification and IPC

B. FIELDS SEARCHED

Minimum documentation searched (classification system followed by classification symbols)
C09K15/18, B60C1/00, C08K5/18, C08L45/00

Documentation searched other than minimum documentation to the extent that such documents are included in the fields searched
Jitsuyo Shinan Koho          1922–1996     Jitsuyo Shinan Toroku Koho    1996–2014
Kokai Jitsuyo Shinan Koho    1971–2014     Toroku Jitsuyo Shinan Koho    1994–2014

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
| --- | --- | --- |
| X | JP 2012-153655 A  (Sumitomo Rubber Industries, Ltd.), 16 August 2012 (16.08.2012), claims 1 to 18; paragraphs [0004], [0045] to [0050], [0055]; examples & US 2013/0090445 A1     & EP 2543654 A1 & WO 2012/102290 A1     & CN 102918009 A | 1-11 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11 September, 2014 (11.09.14) | 22 September, 2014 (22.09.14) |

| Name and mailing address of the ISA/ Japanese Patent Office | Authorized officer |
| --- | --- |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009046661 A
- JP 3755955 B
- JP 3755968 B
- JP 3745885 B
- JP 3835765 B

### Non-patent literature cited in the description

- **E. G. R. ARDAGH ; A.D. BARBOUR ; G. E. MCCLELIAN ; E.W MCBRIDE.** Distillation of Acetate of Lime. *Ind. Eng. Chem.,* 1924, vol. 16 (11), 1133-1139
- **LF GOODWIN ; E. T. STERNE.** Losses Incurred in the Preparation of Acetone by the Distillation of Acetate of Lime. *Industrial & Engineering Chemistry,* 1920, vol. 12 (3), 240-243
- Organic Syntheses. *Coll.,* 1941, vol. 1, 199
- *COLL.,* 1921, vol. 1, 45